# EUROPEAN PATENT SPECIFICATION

(11) **EP 1 608 595 B1**
(45) Date of publication and mention of the grant of the patent: **23.08.2006**
(21) Application number: 03816531.2
(22) Date of filing: 31.03.2003
(51) Int. Cl.: C01G 19/00, C01G 30/00, C01G 25/00, C01G 35/00, C04B 35/457, C04B 35/01, C04B 35/488, C04B 35/495, C04B 35/50, C04B 35/505

(54) **MG2MM' 06+X, ( M=Y, RARE EARTH METAL, AND M'=SN, SB, ZR, HF, AND TA) COMPOUNDS AND A METHOD FOR THE PRODUCTION OF THE SAME**
MG2MM' 06+X, ( M=Y, SELTENES ERDMETALL UND M'=SN, SB, ZR, HF UND TA)-VERBINDUNGEN UND ZUGEHÖRIGES HERSTELLUNGSVERFAHREN
COMPOSES DE MG2MM' 06+X, ( M=Y, METAL DU GROUPE DES TERRES RARES, ET M'=SN, SB, ZR, HF, AND TA) ET LEUR PROCEDE DE PRODUCTION

(43) Date of publication of application: 28.12.2005
(73) Proprietor: COUNCIL OF SCIENTIFIC AND INDUSTRIAL RESEARCH, New Delhi 110 001 (IN)
(72) Inventor: JAMES, Jose, Regional Research Laboratory, Kerala (IN); SENTHIKUMAR,Selvaraj, Regional Research Laboratory, Kerala (IN); NAIR, K.V.P.O., Regional Research Laboratory, Kerala (IN)
(74) Representative: Henkel, Feiler & Hänzel
(86) International application number: PCT/IN2003/000131
(87) International publication number: WO 2004/087575

(56) References cited:
- US-A1- 2002 110 517
- WARIAR P R S ET AL: "Development of superconducting YBa2Cu3O7 - delta and YBa2Cu3O7 - delta-Ag thick film by dip coating on SmBa2SbO6, a new ceramic substrate material" APPLIED SUPERCONDUCTIVITY, PERGAMON PRESS, EXETER, GB, vol. 4, no. 1, 1996, pages 111-117, XP004008880 ISSN: 0964-1807
- J. KOSHY ET AL.: "Rare Earth Barium Stannates: Synthesis, Characterization, and Potential Use as Substrates for YBa2Cu3O7-delta Superconductor" J. AM. CERAM. SOC., vol. 78, no. 11, 1995, pages 3088-3092, XP001179275 cited in the application
- ASHA M. JOHN ET AL.: "Synthesis and rapid densification of nanoparticles of barium praseodymium hafnium oxide: a new complex perovskite" JOURNAL OF NANOPARTICLE RESEARCH , vol. 3, 2001, pages 413-417, XP009025406 cited in the application

## Description

This invention relates to a new group of complex ceramic oxides and a process for their production. This invention particularly relates to novel complex ceramic oxides of the general formula Mg₂MM'O_{6+X}, where M = rare earth metal ion, La or Y and M' = Ta; having a defect pyrochlore structure and the solid state reaction method of their preparation. The complex ceramic powders of the present invention are useful for active and passive electronic applications, for temperature stable, low loss, high permitivity dielectric applications, for temperature stable and temperature compensating dielectrics; microwave dielectrics and as co-fired microwave components, for electrodes of Fuel cells, as catalyst (solid photocatalysts, oxidation catalysts), as gas monitoring sensors, as possible host for radioactive wastes and as host for fluorescence centers.

### Introduction

In recent years, there has been a raising order of interest in the preparation and characterization of complex ceramic oxides, with the general formula A₂MM'O_{6+X}; where A = Ba, Sr and Ca; M = Y and rare earths and M' = Sb, Sn, Nb, Zr, Hf and Ta. The compounds with general formula Ba₂MM'O_{6+X} crystallize in the perovskite structure. Some of the compounds with the formula Sr₂MM'O_{6+X} are also reported. They also possess the perovskite structure. Some of the compounds reported in these system are; Sr₂GaNbO₆, Sr₂GaTaO₆, Sr₂AlNbO₆, Sr₂AlTaO₆, Ca₂GaNbO₆, Ca₂GaTaO₆, Ca₂AlNbO₆, Ca₂AlTaO₆, Ba₂DySnO_{5.5}, Ba₂EuNbO₆, Ba₂ErSbO₆, YBa₂NbO₆, Ba₂DySbO₆, Ba₂PcHfO_{5.5} (J Koshy, K S Kumar, J Kurian, Y P Yadava and A D Damodaran; Rare-earth barium Stannates: Synthesis, characterization and potential use as substrate for YBa₂Cu₃O₇₋₀; Journal of American Ceramic Society; 78[11] 5088-92 (1995); and C D Bradle and V J Fratello; preparation of perovskite oxides for high Tc superconductor substrates; Journal of Materials Research, volume-5, Number-10 pages 2160-2164 year 1990). These compounds were prepared by the conventional solid state reaction technique or by using an exothermic combustion of a polymeric precursor at a relatively low temperature. (J Koshy, J Kurian, R Jose, A M John, P K Sajith, J James, S P Pai and R Pinto; Bulletin of Material Science, Volume-22, Number-3 May 1999 pages 243-249; A M John, R Jose and J Koshy; Synthesis and rapid densification of nanoparticles of Barium Praseodymium Hafnium Oxide; a complex perovskite; Journal of Nanoparticle research, volume-3 year 2001 pages 413-417). However in case of Ca₂MM'O_{6+X} compounds apart from the perovskite structure, a few cases of meta stable pyrochlore structures were also reported. These meta stable pyrochlores transformed into perovskite structures at about 650-700°C. (J Koshy, J Kurian, R Jose, Asha M John, P K Sajith, J James, S P Pai and R Pinto "Novel ceramic substrate for high Tc superconductors" Bulletin of Material Science, vol. 22, pp243-249 (1999); S Ya Istomin, O G D'yachenko and E V Antipov, Synthesis and characterization of reduced niobates CaLnNb₂O₇, Ln = Y Nd with pyrochlore structure; Materials Research Bulletin, vol. 32, No. 4, pp421-30, (1997); J Koshy, J Kurian, P K Sajith, K S Kumar, R Jose, Asha M John and A D Damodaran; Novel ceramic substrate for Bi-cuperate superconductors; US patent No. 5,741,747 dated April 21, (1998)). Some of the magnesium bearing ceramic oxides reported for possible use in electronic ceramic applications are Sr₂MgMoO₆, La₂MgTiO₆, Gd₂MgTiO₆, Gd₂MgZrO₆ and La₂MgGeO₆, (C D Bradle and V J Fratello, preparation of perovskite oxides for high Tc superconductor substrates; journal of Materials Research, volume-5, Number-10, pages-2160-2164 year 1990;). Most of the above mentioned compounds had a perovskite structure. However some of the Magnesium bearing compounds that were reported are Ba(Mg_{1/3}Ta_{2/3})O₃ and PbMg_{1/3}Nb_{2/3}O₃ and Bi₂M'_{2/3}M"_{4/3}O₇ where M' = Zn, Mg, Ni Sc, In and Cu and M" = Nb and Ta (M valant and P K Davis; Synthesis and dielectric properties of pyrochlore solid solutions in the Bi₂O₃-ZnO-Nb₂O₅-TiO₂ system, Journal of Materila Science 34 (1999) 5437-5442). Some of these magnesium-bearing compounds had pyrochlore structures. However compounds of the type Mg₂MM'O₆₊ₓ, either with perovskite structure or pyrochlore structure were not reported.

Pyrochlore structures are the structures with the general formula A₂B₂O₇, where A atoms are 8 coordinated ad B atoms are 6 coordinated with one extra O-atom. In recent years many pyrochlore compounds with more complicated composition (AA')₂(BB)₂O₇ have been synthesized. For the possibility of existence of any pyrochlore compound, there are two criteria: (1) the ratio of the ionic radius of the cation at the A site to that at the B site must be between 1.46 and 1.80 and (2) the chemical valencies of the various ions must made the compound neutral. (Y Xuan, R Liu and Y Q Jia; Synthesis of a new series of compounds RE₂Co_{2/3}Nb_{4/3}O₇ and stability field diagram of RE₂B_{2/3}'B_{4/3}"O₇ pyrochlore compounds; Material Chemistry and Physics, vol-53, pp256-261 (1998)). Pyrochlore compounds have been extensively studied over the past because of their specific properties and consequent technological applications. Some of the very important properties of members of this group of compounds are: low thermal conductivity, high melting point, high thermal expansion coefficient, high stability. They can be used in Gas turbines and diesel engines as thermal barrier coatings. Some of the pyrochlore compounds exhibit high Ionic conductivity and can be used as electrodes for Fuel cells. egs, Gd₂TiMoO₇₊ₓ; Gd₂TiO_{7+X} (P Holtappels, F W Poulsen and M Mogensen; Electrical conductivities and chemical stabilities of mixed conducting pyrochlores for Solid oxide fuel cell applications; Solid State Ionics, vol. 135, pp 675-679 (2000)). Pyrochlore oxides also exhibit catalytic properties and are used as solid photocatalysts (eg. Bi₂MNbO₇, M-Al, Ga, In) (Zhigang Zou, Jinhua Ye and Hironori Arakawa, Preparation, structural and optical properties of a new class of compounds, Bi₂MNbO₇ (M = Al, Ga In); Materials Science and Engineering vol. B79, pp83-85 (2001)), oxidation catalysts and as gas monitoring sensors. They have the ability to accommodate defects and act as possible host for radioactive wastes, and as host for fluorescence centers. Some of the pyrochlore materials also show superconductivity and magnetic properties, including Colossal Magneto resistant behavior; e.g. Sm₂Ti₂O₇, La₂Zr₂O₇, Nd₂Zr₂O₇, La_{0.7}Ba_{0.3}MnO₃, (L Li, Y W Song, H Xiong, Y Q Jia, N Matsushita and Y Xuan; Synthesis, crystal structure and magnetic properties of Sm_{2-X}Coₓ Ti_{2-Y}Nb_{y}O₇ (x = 0, 0.2, 0.4); Materials Chemistry ad Physics, vol-9273, pp. 1-7 (2002); K Koteswara Rao, Taqveem Banu, M Vital, G Y S K Swamy and K Ravi Kumar; Preparation and characterization of bulk and nanoparticles of La₂Zr₂O₇ and Nd₂Zr₂O₇ by sol-gel method; Materials letters; vol. 54, pp 205-210 (2002)).

Pyrochlores have been used in active and passive electronic applications. They are recently recognized as potential candidates for temperature stable, low loss, high permitivity dielectric applications and in temperature stable and temperature compensating dielectrics; microwave dielectrics and as co-fired microwave components (P Holtappels, F W Poulsen and M Mogensen; Electrical conductivities and chemical stabilities of mixed conducting pyrochlores for SOFC applications,; Solid State Ionics, vol. 135, pp 675-679 (2000)).

However no compound of the formula Mg₂MM'O_{6+X} (where -0.5<x<+0.5 and M = Yttrium or Lanthanum or any of the Rare Earth metal ions; and M' = Sb, Sn, Zr, & Ta) has been reported till now.

### Objectives

The main objectives of the present invention is to provide a novel Magnesium based class of complex ceramic oxides, that could be used (i) for active and passive electronic applications, (ii) for temperature stable, low loss, high permitivity dielectric applications (iii) for temperature stable and temperature compensating dielectrics; microwave dielectrics and as co-fired microwave components (iv) for electrodes for Fuel cells (v) as catalyst (solid photocatalysts, oxidation catalysts) (vi) as gas monitoring sensors. (vii) as possible host for radioactive wastes, and (viii) as host for fluorescence centers.

Another objective of the present invention is to prepare a novel class of complex ceramic oxides having the formula Mg₂MM'O₆₊ₓ where M = Y, La and rare earth metal ions; and M' = Ta and having a defect pyrochlore structure.

Yet another objective of the present invention is to provide a method for the preparation of a novel magnesium bearing class of complex ceramic oxides having the above formula, structure and uses.

### Figures:

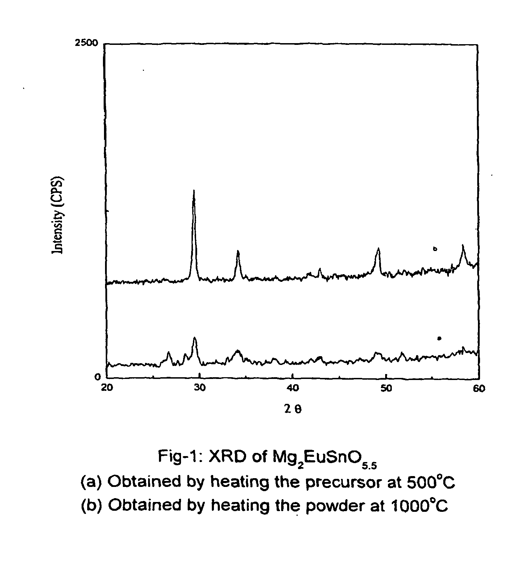

- Fig. 1 :: XRD of Mg₂ Eu Sn O_{5.5} (ref. ex.)

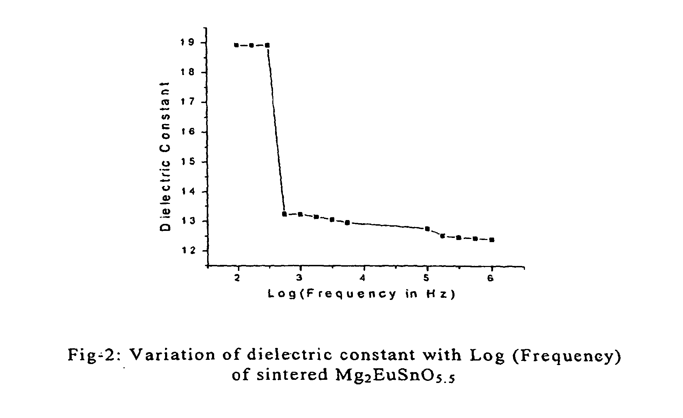

- Fig. 2 :: Variation of dielectric constant with log (frequency) of sintered Mg₂ Eu Sn O_{5.5} (ref. ex.)

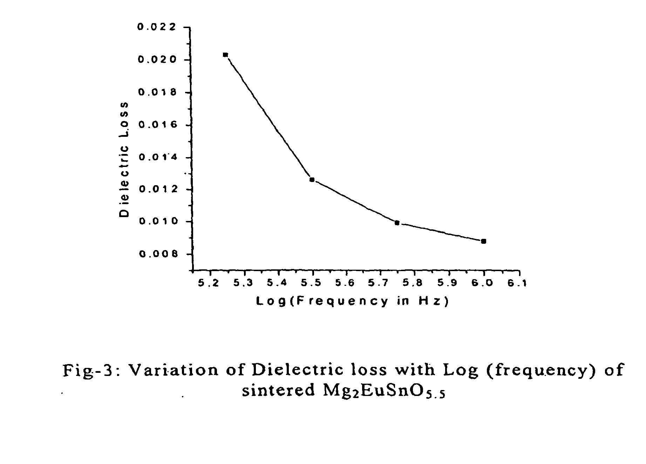

- Fig 3 :: Variation of dielectric loss with log (frequency) of sintered Mg₂ Eu Sn O_{5.5} (ref. ex.)

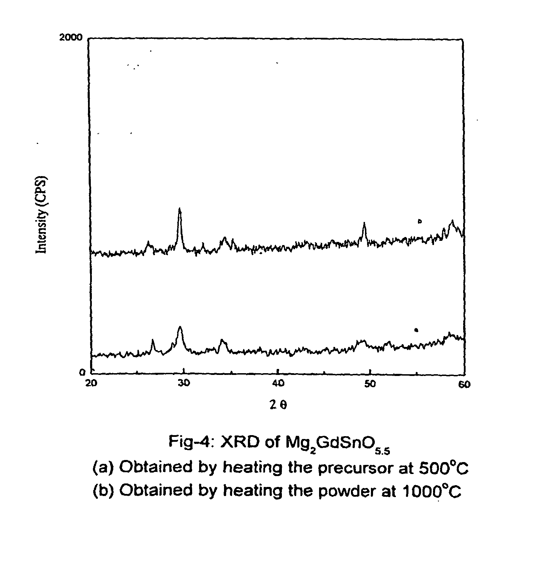

- Fig. 4 :: XRD of Mg₂ Gd Sn O_{5.5} (ref. ex.)

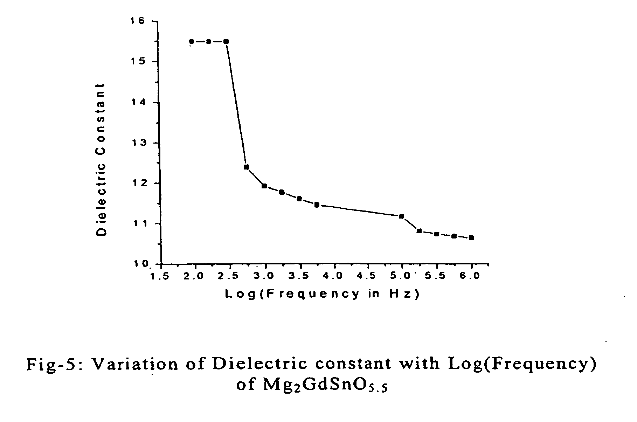

- Fig. 5 :: Variation of dielectric constant with log (frequency) of Mg₂ Gd Sn O_{5.5} (ref. ex.)

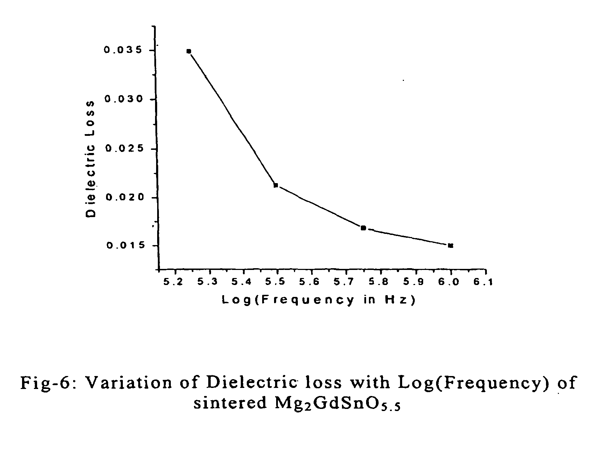

- Fig. 6 :: Variation of dielectric loss with log (Frequency) of sintered Mg₂ Gd Sn O_{5.5} (ref. ex)

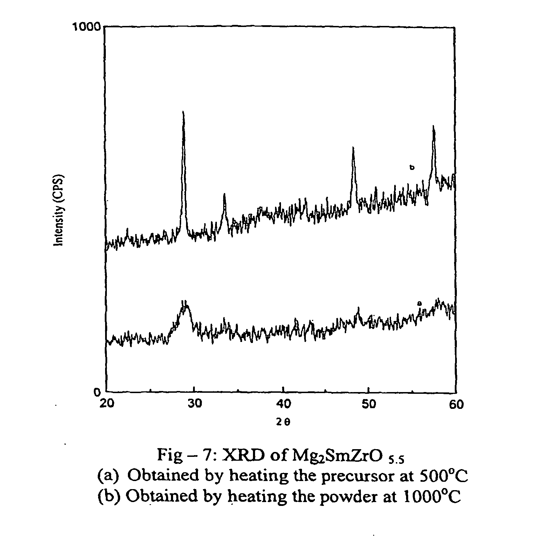

- Fig. 7 :: XRD of Mg₂ Sm Zr O_{5.5} (ref. ex.)

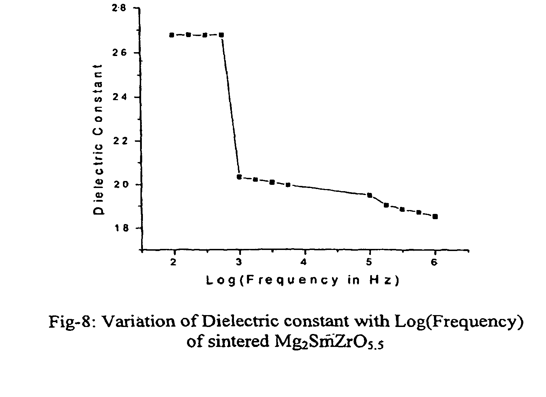

- Fig. 8 :: Variation of dieletric constant with log frequency of Mg₂ Sm Zr O_{5.5} (ref. ex)

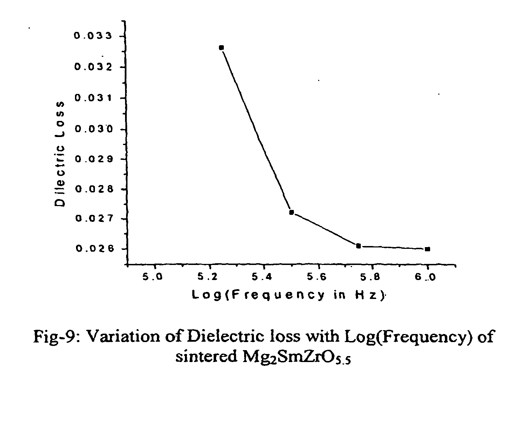

- Fig. 9 :: Variation of dielectric loss with log frequency of Mg₂ Sm Zr O_{5.5} (ref. ex)

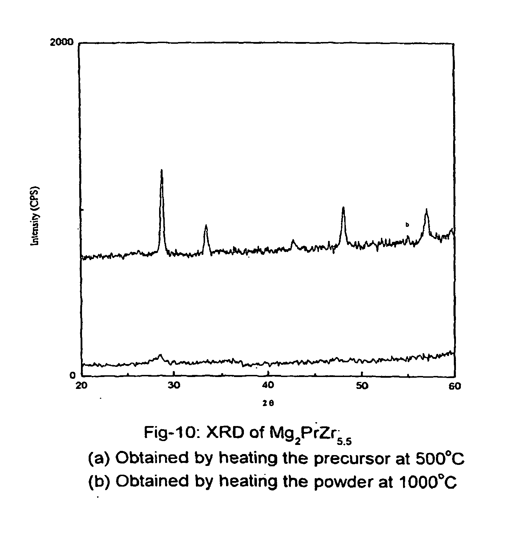

- Fig 10 :: XRD of Mg₂ Pr Zr O_{5.5} (ref. ex.)

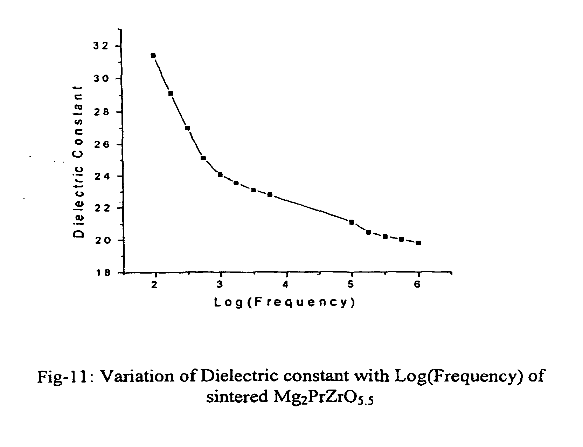

- Fig. 11 :: Variation of dielectric constant with log frequency of sintered Mg₂ Pr Zr O_{5.5} (ref. ex.)

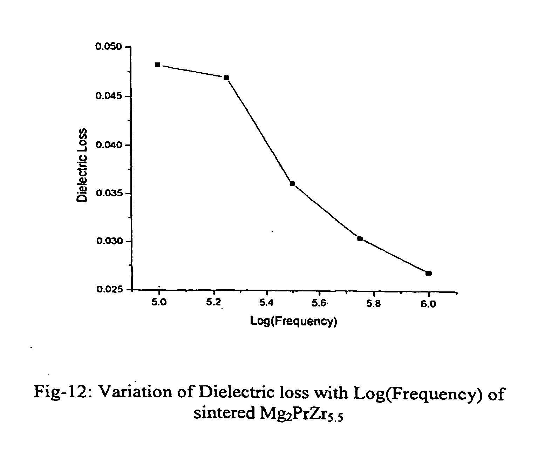

- Fig. 12 :: Variation of dielectric loss with log (frequency) of sintered Mg₂ +Pr ZrO_{5.5} (ref. ex.)

### Invention

We have now prepared a new class of Mg bearing compounds with the general formula Mg₂MM'O_{6+X}, (M = Y, La and rare earth metal ions; and M' = Ta) having a defect pyrochlore structures. Accordingly the invention provides a process for the preparation of the above mentioned class of compounds which comprises:
(i) Mixing the compounds of magnesium, M and M' (where M may be Yttrium, or any of the rare earth metals; ad M' = tantalum) in such a way as to get the molar ratio of Mg:M:M' as 2:1:1 required for the formation of the compounds of the general formula Mg₂MM'O₆₊ₓ, Minor variations in the compositions up to 8% in one metal ions may be tolerated for the formation of the required phase.
(ii) The compounds employed in step (i) may be selected from their oxides, carbonates, chlorides, alkoxides, nitrates, sulphates etc; preferably the salts used are selected from oxides or carbonates.
(iii) The mixture obtained in step (i) may be ball milled or mixed with wetting medium. The wetting medium may be water, alcohol, acetone or any other organic solvent. The resultant ball milled slurry may be dried to remove the liquid and obtain dry powder.
(iv) Heating the resultant mixture to a temperature in the range 1000-1450°C as required for different duration ranging from 3 hour to 50 hours, either in a single step or by taking out the reactant after few hours of heating, checking for phase formation and heating it again after grinding if necessary. Up to a maximum of 5 intermediate grindings may be required.

The complex ceramic powders of the present invention are useful (i) for active and passive electronic applications, (ii) for temperature stable, low loss, high permitivity dielectric applications (iii) for temperature stable and temperature compensating dielectrics; microwave dielectrics and as co-fired microwave components (iv) for electrodes for Fuel cells (v) as catalyst (solid photocatalysts, oxidation catalysts) (vi) as gas monitoring sensors. (vii) as possible host for radioactive wastes, and (viii) as host for fluorescence centers.

The details of the present invention are described in the examples given below. These examples are provided by way of illustration only and should not be construed to limit the scope of the invention.

Accordingly, the present invention provides novel compounds of the general formula Mg₂MM'O₆₊ₓ where M = Y, La or a rare earth metal, M' = Ta, -0.5 < x < +0.5 having pyrochlore structure, wherein minor variations in the compositions up to 8%, in any of the metal ions is tolerated for the formation of the required phase, and, a process for the preparation of the said novel compounds comprising:
(i) Mixing the compounds of magnesium, M and M' (where M = Y, La or a rare earth metal, M' = Ta) in such a way as to get the molar ratio of Mg:M:M' as 2:1:1 required for the formation of the compounds of the general formula Mg₂MM'O_{6+X}, wherein minor variations in the compositions up to 8% in any of metal ion is tolerated for the formation of the required phase;
(ii) the mixture obtained in step (i) is ball milled or mixed with a wetting medium;
(iii) the resultant ball milled slurry obtained is dried to remove the liquid and obtain dry powder.
(iv) Heating the resultant mixture to a temperature in the range 1000-1600°C as required for different duration ranging from 3 hour to 50 hours, either in a single step or by taking out the reactant after few hours of heating, checking for phase formation and heating it again after grinding if necessary, upto a maximum of 5 intermediate grindings may be required.

In an embodiment of the present invention, the compounds employed in the process are selected from their oxides, carbonates chlorides, alkoxides, nitrates, sulfates etc. and preferably the salts used are selected from oxides or carbonate.

In another embodiment of the present invention the wetting medium used in the process is selected from water, alcohol, acetone or any other organic solvent.

In another embodiment of the present invention, novel compound obtained is of the formula Mg₂SmTaO₆ as nanoparticle having pyrochlore structure wherein minor variation in the compositions upto 8% in any of the metal ions is tolerated for the formation of the phase.

In still another embodiment of the present invention, novel compound obtained is of the formula Mg₂NdTaO₆ as nanoparticle having pyrochlore structure wherein minor variation in the compositions upto 8% in any of the metal ions is tolerated for the formation of the phase.

In yet another embodiment of the present invention, novel compound obtained is of the formula Mg₂DyTaO₆ as nanoparticle having pyrochlore structure wherein minor variation in the compositions upto 8% in any of the metal ions is tolerated for the formation of the phase.

In yet another embodiment of the present invention, novel compound obtained is of the formula Mg₂PrTaO₆ as nanoparticle having pyrochlore structure wherein minor variation in the compositions upto 8% in any of the metal ions is tolerated for the formation of the phase.

In yet another embodiment of the present invention, novel compound obtained is of the formula Mg₂GdTaO₆ as nanoparticle having pyrochlore structure wherein minor variation in the compositions upto 8% in any of the metal ions is tolerated for the formation of the phase.

In still another embodiment of the present invention, novel compound obtained is for the formula Mg₂EuTaO₆ as nanoparticle having pyrochlore structure wherein minor variation in the compositions upto 8% in any of the metal ions is tolerated for the formation of the phase.

In still another embodiment of the present invention, novel compound obtained is of the formula Mg₂LaTaO₆ as nanoparticle having pyrochlore structure wherein minor variation in the compositions upto 8% in any of the metal ions is tolerated for the formation of the phase.

In further embodiment outside of the invention, novel compound obtained is of the formula Mg₂DySbO₆ as nanoparticte having pyrochlore structure wherein minor variation in the compositions upto 8% in any of the metal ions is tolerated for the formation of the phase.

In further embodiment outside of the present invention, novel compound obtained is of the formula Mg₂SmZrO_{5.5}, as nanoparticle having pyrochlore structure wherein minor variation in the compositions upto 8% in any of the metal ions is tolerated for the formation of the phase.

In still further embodiment outside of the present invention, novel compound obtained is of the formula Mg₂NdZrO_{5.5} as nanoparticle having pyrochlore structure wherein minor variation in the compositions upto 8% in any of the metal ions is tolerated for the formation of the phase.

In still further embodiment outside of the present invention, novel compound obtained is of the formula Mg₂DyZrO_{5.5} as nanoparticle having pyrochlore structure wherein minor variation in the compositions upto 8% in any of the metal ions is tolerated for the formation of the phase.

In yet further embodiment outside of the present invention, novel compound obtained is of the formula Mg₂LaSnO_{5.5} as nanoparticle having pyrochlore structure wherein minor variation in the composition upto 8% in any of the metal ions is tolerated for the formation of the phase.

In yet further embodiment outside of the present invention, novel compound obtained is of the formula Mg₂GdZrO_{5.5} as nanoparticle having pyrochlore structure wherein minor variation in the compositions upto 8% in any of the metal ions is tolerated for the formation of the phase.

In still another embodiment outside of the present invention, novel compound obtained is of the formula Mg₂EuZrO_{5.5} as nanoparticle having pyrochlore structure wherein minor variation in the compositions upto 8% in any of the metal ions is tolerated for the formation of the phase.

In yet another embodiment oustide of the present invention, novel compound obtained is of the formula Mg₂LaZrO_{5.5} as nanoparticle having pyrochlore structure wherein minor variation in the compositions upto 8% in any of the metal ions is tolerated for the formation of the phase.

In still further embodiment outside of the present invention, novel compound obtained is of the formula Mg₂PrZrO_{5.5} as nanoparticle having pyrochlore structure wherein minor variation in the compositions upto 8% in any of the metal ions is tolerated for the formation of the phase.

### Example-1 : Magnesium Samarium Tantalate (Mg₂SmTaO₆),

Magnesium Samarium Tantalate (Mg₂SmTaO₆), for example, is obtained by:
(i) Taking four gram molecular weight of Magnesium Carbonate (MgCO₃), one gram molecular weight of Samarium Oxide (Sm₂O₃), and one gram molecular weight of Tantalum oxide (Ta₂O₅).
(ii) Mixing these three reactants by ball milling the mixture for 24 hours using water as the wetting medium.
(iii) Drying the ball milled reaction mixture (sample) in an oven at about 120°C.
(iv) Pelletizing the sample and heating at 1400°C for 10 hours with three intermediate grinding.
(v) The XRD pattern of this compound is shown in Figure-1.
(vii) Considering the highest possible oxidation states of the metals used; (Mg -+2, Sm - +3 and Ta - +5) the chemical formula of the compound Magnesium Samarium Tantalate is worked out to be Mg₂SmTaO₆.
(vii) The variation of dielectric constant and loss factor of the compound Mg₂SmTaO₆ is shown in Figure - 2 and Figure - 3. This clearly shows that the compound is suitable for use as electronic ceramic material for all applications where the dielectric constant plays a crucial role. E.g. substrate for superconductors.
(viii) The compound does not show any phase transition on heating up to 1300°C.

### Example-2 Magnesium Lanthanum Stanate (Mg₂LaSnO_{5.5}), (outside of the invention)

Magnesium Lanthanum Stanate (Mg₂LaSnO_{5.5}), for example, is obtained by;
(i) Taking four gram molecular weight of Magnesium Carbonate (MgCO₃), one gram molecular weight of lantanum oxide(La₂O₃), and one gram molecular weight of Tin oxide (SnO₂).
(ii) Mixing these three reactants by ball milling the mixture for 12 hours using water as the wetting medium.
(iii) Drying the ball milled reaction mixture (sample) in an oven at about 120°C
(iv) Pelletizing the sample and heating at 1450°C for 10 hours with one intermediate grinding.
(v) The XRD pattern of this compound is shown in Figure-4.
(vi) Considering the highest possible oxidation states of the metals used; (Mg -+2, La - +3 and Sn - +4) the chemical formula of the compound Magnesium lanthanum Stannate is worked out to be (Mg₂LaSnO_{5.5}),
(vii) The variation of dielectric constant and loss factor of the compound Mg₂LaSnO_{5.5} is shown in Figure - 5 and Figure - 6. This clearly shows that the compound is suitable for use as electronic ceramic material for all applications where dielectric constant and loss factor play an important role. E.g. as substrate for superconductors.
(viii) The compound does not show any phase transition on heating up to 1300°C.

### Example-3 Magnesium Dysprosium Antimonate (Mg2DySb₆) (outside of the invention)

Magnesium Dysprosium Antimonate (Mg₂DySbO₆), for example, is obtained by;
(i) Taking four gram molecular weight of Magnesium Carbonate (MgCO₃), one gram molecular weight of dysprosium oxide (Dy₂O₃), and one gram molecular weight of antimony pentoxide (Sb₂O₅).
(ii) Mixing these three reactants by ball milling the mixture for 18 hours using water as the wetting medium.
(iii) Drying the ball milled reaction mixture (sample) in an oven at about 120°C
(iv) Pelletizing the sample and heating at 1550°C for 10 hours with one intermediate grinding.
(v) The XRD pattern of this compound is shown in Figure-7.
(vi) Considering the highest possible oxidation states of the metals used; (Mg -+2, Dy - +3 and Sb - +5) the chemical formula of the compound Magnesium Dysprosium Antimonate is worked out to be (Mg₂DySbO₆),
(vii) The variation of dielectric constant and loss factor of the compound Mg₂DySbO₆ is shown in Figure-8 and Figure-9. This clearly shows that the compound is suitable for use in all electronic ceramic applications where the dielectric constant and loss factor plays an important role as substrate for superconductors.
(viii) The compound does not show any phase transition on heating up to 1300°C.

### Example-4 Magnesium Neodymium Zirconate (Mg2NdZrO6) (outside of the invention)

Magnesium Neodymium Zirconate (Mg2NdZrO6), for example, is obtained by;
(i) taking four gram molecular weight of Magnesium Carbonate (MgCO₃), one gram molecular weight of Neodymium oxide (Nd₂O₃), and one gram molecular weight of Zirconium oxide (ZrO₂).
(ii) mixing these three reactants by ball milling the mixture for 15 hours using water as the wetting medium.
(iii) Drying the ball milled reaction mixture (sample) in an oven at about 120°C
(iv) Pelletizing the sample and heating at 1450°C for 8 hours with one intermediate grinding and subsequent heating.
(v) The XRD pattern of this compound is shown in Figure-10.
(vi) Considering the highest possible oxidation states of the metals used; (Mg -+2, Nd - +4 and Zr - +4) the chemical formula of the compound Magnesium Presudomium zirconate is worked out to be (Mg₂NdZrO₆),
(vii) The variation of dielectric constant and loss factor of the compound Mg₂NdZrO₆ is shown in Figure - 11 and Figure-12. This clearly shows that the compound is suitable for use in all electronic ceramic applications where dielectric constant and loss factor plays an important role. E.g. as substrate for superconductors.
(viii) The compound does not show any phase transition on heating up to 1300°C.

## Claims

1. Novel compounds of the general formula Mg₂MM'O₆₊ₓ where M=Y, La or a rare earth metal, M'= Ta, -0.5<x<+0.5 having pyrochlore structure, wherein minor variations in the compositions up to 8%, in any of the metal ions is tolerated for the formation of the required phase.

2. Novel compounds as claimed in claim 1, of the formula Mg₂SmTaO₆ as nanoparticles, having pyrochlore structure wherein minor variation in the compositions up to 8% in any of the metal ions is tolerated for the formation of the phase.

3. Novel compounds as claimed in claim 1, of the formula Mg₂NdTaO₆ as nanoparticles, having pyrochlore structure wherein minor variation in the compositions up to 8% in any of the metal ions is tolerated for the formation of the phase.

4. Novel compounds as claimed in claim 1, of the formula Mg₂DyTaO₆ as nanoparticles, having pyrochlore structure wherein minor variation in the compositions up to 8% in any of the metal ions is tolerated for the formation of the phase.

5. Novel compounds as claimed in claim 1, of the formula Mg₂PrTaO₆ as nanoparticles, having pyrochlore structure wherein minor variation in the compositions up to 8% in any of the metal ions is tolerated for the formation of the phase.

6. Novel compounds as claimed in claim 1, of the formula Mg₂GdTaO₆ as nanoparticles, having pyrochlore structure wherein minor variation in the compositions up to 8% in any of the metal ions is tolerated for the formation of the phase.

7. Novel compounds as claimed in claim 1, of the formula Mg₂EuTaO₆ as nanoparticles, having pyrochlore structure wherein minor variation in the compositions up to 8% in any of the metal ions is tolerated for the formation of the phase.

8. Novel compounds as claimed in claim 1, of the formula Mg₂LaTaO₆ as nanoparticles, having pyrochlore structure wherein minor variation in the compositions up to 8% in any of the metal ions is tolerated for the formation of the phase.

9. A process for the preparation of the novel class of compounds as claimed in claim 1 to 8, which comprises:
(i) Mixing the compounds of magnesium, M and M' (where M=Y, La or a rare earth metal, M'= Ta) in such a way as to get the molar ratio of Mg:M:M' as 2:1:1 required for the formation of the compounds of the general formula Mg₂MM'O₆₊ₓ, wherein minor variations in the compositions up to 8% in any of the metal ions is tolerated for the formation of the required phase;
(ii) the mixture obtained in step 9(i) is ball milled or mixed with a wetting medium;
(iii) the resultant ball milled slurry obtained is dried to remove the liquid and obtain dry powder;
(iv) heating the resultant mixture to a temperature in the range 1000-1600°C as required for a different duration ranging from 3 hours to 50 hours, either in a single step of by taking our the reactant after few hours of heating, checking for phase formation and heating it again after grinding if necessary up to a maximum of 5 intermediate grindings may be required.

10. A process as claimed in claim 9, wherein the compounds employed in step 9(i) are selected from their oxides, carbonates, chlorides, alkoxides, nitrates, sulfates etc. and preferably the salts used are selected from oxides or carbonate.

11. A process as claimed in claim 9 or 10, wherein the wetting medium used in step 9(ii) is selected from water, alcohol, acetone or any other organic solvent.

12. A process as claimed in claim 9 for the preparation of a novel compound of the formula Mg₂SmTaO₆ as nanoparticles, having pyrochlore structure wherein minor variation in the compositions up to 8% in any of the metal ions is tolerated for the formation of the phase.

13. A process as claimed in claim 9 for the preparation of a novel compound of the formula Mg₂NdTaO₆ as nanoparticles, having pyrochlore structure wherein minor variation in the compositions up to 8% in any of the metal ions is tolerated for the formation of the phase.

14. A process as claimed in claim 9 for the preparation of a novel compound of the formula Mg₂DyTaO₆ as nanoparticles, having pyrochlore structure wherein minor variation in the compositions up to 8% in any of the metal ions is tolerated for the formation of the phase.

15. A process as claimed in claim 9 for the preparation of a novel compound of the formula Mg₂PrTaO₆ as nanoparticles, having pyrochlore structure wherein minor variation in the compositions up to 8% in any of the metal ions is tolerated for the formation of the phase.

16. A process as claimed in claim 9 for the preparation of a novel compound of the formula Mg₂GdTaO₆ as nanoparticles, having pyrochlore structure wherein minor variation in the compositions up to 8% in any of the metal ions is tolerated for the formation of the phase.

17. A process as claimed in claim 9 for the preparation of a novel compound of the formula Mg₂EuTaO₆ as nanoparticles, having pyrochlore structure wherein minor variation in the compositions up to 8% in any of the metal ions is tolerated for the formation of the phase.

18. A process as claimed in claim 9 for the preparation of a novel compound of the formula Mg₂LaTaO₆ as nanoparticles, having pyrochlore structure wherein minor variation in the compositions up to 8% in any of the metal ions is tolerated for the formation of the phase.

## Patentansprüche

1. Neue Verbindungen der allgemeinen Formel Mg₂MM'O₆₊ₓ, worin M = Y, La oder ein Seltenerdmetall, M' = Ta, -0,5 < x < +0,5, mit Pyrochlorstruktur, wobei geringere Variationen in den Zusammensetzungen bis zu 8 % im Hinblick auf beliebige der Metallionen zur Bildung der erforderlichen Phase toleriert werden.

2. Neue Verbindungen gemäß Anspruch 1 der Formel Mg₂SmTaO₆ als Nanopartikel mit Pyrochlorstruktur, wobei eine geringere Variation in den Zusammensetzungen bis zu 8 % im Hinblick auf beliebige der Metallionen zur Bildung der Phase toleriert wird.

3. Neue Verbindungen gemäß Anspruch 1 der Formel Mg₂NdTaO₆ als Nanopartikel mit Pyrochlorstruktur, wobei eine geringere Variation in den Zusammensetzungen bis zu 8 % im Hinblick auf beliebige der Metallionen zur Bildung der Phase toleriert wird.

4. Neue Verbindungen gemäß Anspruch 1 der Formel Mg₂DyTaO₆ als Nanopartikel mit Pyrochlorstruktur, wobei eine geringere Variation in den Zusammensetzungen bis zu 8 % im Hinblick auf beliebige der Metallionen zur Bildung der Phase toleriert wird.

5. Neue Verbindungen gemäß Anspruch 1 der Formel Mg₂PrTaO₆ als Nanopartikel mit Pyrochlorstruktur, wobei eine geringere Variation in den Zusammensetzungen bis zu 8 % im Hinblick auf beliebige der Metallionen zur Bildung der Phase toleriert wird.

6. Neue Verbindungen gemäß Anspruch 1 der Formel Mg₂GdTaO₆ als Nanopartikel mit Pyrochlorstruktur, wobei eine geringere Variation in den Zusammensetzungen bis zu 8 % im Hinblick auf beliebige der Metallionen zur Bildung der Phase toleriert wird.

7. Neue Verbindungen gemäß Anspruch 1 der Formel Mg₂EuTaO₆ als Nanopartikel mit Pyrochlorstruktur, wobei eine geringere Variation in den Zusammensetzungen bis zu 8 % im Hinblick auf beliebige der Metallionen zur Bildung der Phase toleriert wird.

8. Neue Verbindungen gemäß Anspruch 1 der Formel Mg₂LaTaO₆ als Nanopartikel mit Pyrochlorstruktur, wobei eine geringere Variation in den Zusammensetzungen bis zu 8 % im Hinblick auf beliebige der Metallionen zur Bildung der Phase toleriert wird.

9. Verfahren zur Herstellung der neuen Klasse von Verbindungen gemäß Anspruch 1 bis 8, das umfasst:
(i) Mischen der Verbindungen von Magnesium, M und M' (worin M = Y, La oder ein Seltenerdmetall, M' = Ta) derart, dass ein Molverhältnis von Mg:M:M' von 2:1:1 erhalten wird, das zur Bildung der Verbindungen der allgemeinen Formel Mg₂MM'O₆₊ₓ erforderlich ist, wobei geringere Variationen in den Zusammensetzungen bis zu 8 % im Hinblick auf beliebige der Metallionen zur Bildung der erforderlichen Phase toleriert werden;
(ii) Mahlen des in Stufe 9(i) erhaltenen Gemischs in einer Kugelmühle oder Mischen mit einem Befeuchtungsmedium;
(iii) Trocknen der erhaltenen, in einer Kugelmühle gemahlenen Aufschlämmung zum Entfernen der Flüssigkeit und Gewinnen eines trockenen Pulvers;
(iv) Erhitzen des erhaltenen Gemischs auf eine Temperatur im Bereich von 1000-1600 °C nach Bedarf über eine unterschiedliche Zeitdauer im Bereich von 3 h bis 50 h entweder in einer einzigen Stufe oder durch Entnehmen des Reaktionsgemischs nach einigen Stunden Erhitzen, Überprüfen der Phasenbildung und erneutes Erhitzen nach Mahlen, falls nötig, wobei bis zu maximal 5 dazwischenliegende Mahlvorgänge erforderlich sein können.

10. Verfahren gemäß Anspruch 9, wobei die in Stufe 9(i) verwendeten Verbindungen aus deren Oxiden, Carbonaten, Chloriden, Alkoxiden, Nitraten, Sulfaten und dgl. ausgewählt sind und vorzugsweise die verwendeten Salze aus Oxiden oder Carbonat ausgewählt sind.

11. Verfahren gemäß Anspruch 9 oder 10, wobei das in Stufe 9(ii) verwendete Befeuchtungsmedium aus Wasser, Alkohol, Aceton oder einem anderen organischen Lösemittel ausgewählt ist.

12. Verfahren gemäß Anspruch 9 zur Herstellung einer neuen Verbindung der Formel Mg₂SmTaO₆ als Nanopartikel mit Pyrochlorstruktur, wobei eine geringere Variation in den Zusammensetzungen bis zu 8 % im Hinblick auf beliebige der Metallionen für die Bildung der Phase toleriert wird.

13. Verfahren gemäß Anspruch 9 zur Herstellung einer neuen Verbindung der Formel Mg₂NdTaO₆ als Nanopartikel mit Pyrochlorstruktur, wobei eine geringere Variation in den Zusammensetzungen bis zu 8 % im Hinblick auf beliebige der Metallionen für die Bildung der Phase toleriert wird.

14. Verfahren gemäß Anspruch 9 zur Herstellung einer neuen Verbindung der Formel Mg₂DyTaO₆ als Nanopartikel mit Pyrochlorstruktur, wobei eine geringere Variation in den Zusammensetzungen bis zu 8 % im Hinblick auf beliebige der Metallionen für die Bildung der Phase toleriert wird.

15. Verfahren gemäß Anspruch 9 zur Herstellung einer neuen Verbindung der Formel Mg₂PrTaO₆ als Nanopartikel mit Pyrochlorstruktur, wobei eine geringere Variation in den Zusammensetzungen bis zu 8 % im Hinblick auf beliebige der Metallionen für die Bildung der Phase toleriert wird.

16. Verfahren gemäß Anspruch 9 zur Herstellung einer neuen Verbindung der Formel Mg₂GdTaO₆ als Nanopartikel mit Pyrochlorstruktur, wobei eine geringere Variation in den Zusammensetzungen bis zu 8 % im Hinblick auf beliebige der Metallionen für die Bildung der Phase toleriert wird.

17. Verfahren gemäß Anspruch 9 zur Herstellung einer neuen Verbindung der Formel Mg₂EuTaO₆ als Nanopartikel mit Pyrochlorstruktur, wobei eine geringere Variation in den Zusammensetzungen bis zu 8 % im Hinblick auf beliebige der Metallionen für die Bildung der Phase toleriert wird.

18. Verfahren gemäß Anspruch 9 zur Herstellung einer neuen Verbindung der Formel Mg₂LaTaO₆ als Nanopartikel mit Pyrochlorstruktur, wobei eine geringere Variation in den Zusammensetzungen bis zu 8 % im Hinblick auf beliebige der Metallionen für die Bildung der Phase toleriert wird.

## Revendications

1. Nouveaux composés de formule générale Mg₂MM'O₆₊ₓ, où M = Y, La ou un métal terre rare, M' = Ta, -0,5 < x < +0,5, ayant une structure pyrochlore, dans lesquels des variations mineures dans les compositions jusqu'à 8% dans l'un quelconque des ions métalliques sont tolérées pour la formation de la phase requise.

2. Nouveaux composés selon la revendication 1, de formule Mg₂SmTaO₆ sous la forme de nanoparticules, ayant une structure pyrochlore, dans lesquels des variations mineures dans les compositions jusqu'à 8% dans l'un quelconque des ions métalliques sont tolérées pour la formation de la phase.

3. Nouveaux composés selon la revendication 1, de formule Mg₂NdTaO₆ sous la forme de nanoparticules, ayant une structure pyrochlore, dans lesquels des variations mineures dans les compositions jusqu'à 8% dans l'un quelconque des ions métalliques sont tolérées pour la formation de la phase.

4. Nouveaux composés selon la revendication 1, de formule Mg₂DyTaO₆ sous la forme de nanoparticules, ayant une structure pyrochlore, dans lesquels des variations mineures dans les compositions jusqu'à 8% dans l'un quelconque des ions métalliques sont tolérées pour la formation de la phase.

5. Nouveaux composés selon la revendication 1, de formule Mg₂PrTaO₆ sous la forme de nanoparticules, ayant une structure pyrochlore, dans lesquels des variations mineures dans les compositions jusqu'à 8% dans l'un quelconque des ions métalliques sont tolérées pour la formation de la phase.

6. Nouveaux composés selon la revendication 1, de formule Mg₂GdTaO₆ sous la forme de nanoparticules, ayant une structure pyrochlore, dans lesquels des variations mineures dans les compositions jusqu'à 8% dans l'un quelconque des ions métalliques sont tolérées pour la formation de la phase.

7. Nouveaux composés selon la revendication 1, de formule Mg₂EuTaO₆ sous la forme de nanoparticules, ayant une structure pyrochlore, dans lesquels des variations mineures dans les compositions jusqu'à 8% dans l'un quelconque des ions métalliques sont tolérées pour la formation de la phase.

8. Nouveaux composés selon la revendication 1, de formule Mg₂LaTaO₆ sous la forme de nanoparticules, ayant une structure pyrochlore, dans lesquels des variations mineures dans les compositions jusqu'à 8% dans l'un quelconque des ions métalliques sont tolérées pour la formation de la phase.

9. Procédé de préparation de la nouvelle classe de composés selon les revendications 1 à 8, qui comprend :
(i) le mélange des composés du magnésium, de M et de M' (où M = Y, La ou un métal terre rare, M' = Ta) de telle manière que l'on ait le rapport molaire Mg:M:M' 2:1:1 requis pour la formation des composés de formule générale Mg₂MM'O₆₊ₓ, dans lesquels des variations mineures dans les compositions jusqu'à 8% dans l'un quelconque des ions métalliques sont tolérées pour la formation de la phase requise ;
(ii) le mélange obtenu à l'étape (i) est broyé dans un broyeur à boulets ou mélangé à un agent mouillant ;
(iii) la pâte broyée par boulets résultante obtenue est séchée pour éliminer le liquide et obtenir un poudre sèche ;
(iv) le chauffage du mélange résultant à une température située dans l'intervalle allant de 1000-1600°C comme requis pendant une période allant de 3 heures à 50 heures, en une seule étape ou en prélevant le réactif après quelques heures de chauffage, en contrôlant la formation de la phase et en le chauffant à nouveau après broyage, si nécessaire, jusqu'à un maximum de 5 broyages intermédiaires.

10. Procédé selon la revendication 9, dans lequel les composés utilisés dans l'étape (i) sont choisis parmi leurs oxydes, carbonates, chlorures, alcoxydes, nitrates, sulfates, etc. et de préférence, les sels utilisés sont choisis parmi les oxydes ou carbonates.

11. Procédé selon la revendication 9 ou 10, dans lequel l'agent mouillant utilisé à l'étape (ii) est choisi parmi l'eau, un alcool, l'acétone ou tout autre solvant organique.

12. Procédé selon la revendication 9 pour la préparation d'un nouveau composé de formule Mg₂SmTaO₆ sous la forme de nanoparticules, ayant une structure pyrochlore, dans lequel des variations mineures dans les compositions jusqu'à 8% dans l'un quelconque des ions métalliques sont tolérées pour la formation de la phase.

13. Procédé selon la revendication 9 pour la préparation d'un nouveau composé de formule Mg₂NdTaO₆ sous la forme de nanoparticules, ayant une structure pyrochlore, dans lequel des variations mineures dans les compositions jusqu'à 8% dans l'un quelconque des ions métalliques sont tolérées pour la formation de la phase.

14. Procédé selon la revendication 9 pour la préparation d'un nouveau composé de formule Mg₂DyTaO₆ sous la forme de nanoparticules, ayant une structure pyrochlore, dans lequel des variations mineures dans les compositions jusqu'à 8% dans l'un quelconque des ions métalliques sont tolérées pour la formation de la phase.

15. Procédé selon la revendication 9 pour la préparation d'un nouveau composé de formule Mg₂PrTaO₆ sous la forme de nanoparticules, ayant une structure pyrochlore, dans lequel des variations mineures dans les compositions jusqu'à 8% dans l'un quelconque des ions métalliques sont tolérées pour la formation de la phase.

16. Procédé selon la revendication 9 pour la préparation d'un nouveau composé de formule Mg₂GdTaO₆ sous la forme de nanoparticules, ayant une structure pyrochlore, dans lequel des variations mineures dans les compositions jusqu'à 8% dans l'un quelconque des ions métalliques sont tolérées pour la formation de la phase.

17. Procédé selon la revendication 9 pour la préparation d'un nouveau composé de formule Mg₂EuTaO₆ sous la forme de nanoparticules, ayant une structure pyrochlore, dans lequel des variations mineures dans les compositions jusqu'à 8% dans l'un quelconque des ions métalliques sont tolérées pour la formation de la phase.

18. Procédé selon la revendication 9 pour la préparation d'un nouveau composé de formule Mg₂LaTaO₆ sous la forme de nanoparticules, ayant une structure pyrochlore, dans lequel des variations mineures dans les compositions jusqu'à 8% dans l'un quelconque des ions métalliques sont tolérées pour la formation de la phase.
